# EUROPEAN PATENT SPECIFICATION

(11) **EP 0 526 163 B1**
(45) Date of publication and mention of the grant of the patent: **04.03.1998**
(21) Application number: 92306876.1
(22) Date of filing: 28.07.1992
(51) Int. Cl.: H04N 7/24, H04N 7/32

(54) **Image coding method and image coding apparatus**
Verfahren und Einrichtung zur Bildkodierung
Méthode et dispositif de codage d'image

(30) Priority: 31.07.1991 JP 191603/91
(43) Date of publication of application: 03.02.1993
(73) Proprietor: MATSUSHITA ELECTRIC INDUSTRIAL CO., LTD., Kadoma-shi, Osaka-fu 571 (JP)
(72) Inventor: Nagata, Atsushi, Katano-shi, Osaka-fu, 576 (JP)
(74) Representative: Crawford, Andrew Birkby

(56) References cited:
- EP-A- 0 395 440
- EP-A- 0 424 026
- US-A- 4 703 351
- IEEE TRANSACTIONS ON COMMUNICATIONS vol. 35, no. 6, June 1987, pages 637 - 645 MURAKAMI ET AL. '15/30 Mbits/s Universal Digital TV Codec Using a Median Adaptive Predictive Coding Method'
- SIGNAL PROCESSING : IMAGE COMMUNICATION vol. 2, no. 2, August 1990, AMSTERDAM pages 127 - 144 PURI ET AL. 'Video coding with motion-compensated interpolation for CD-ROM applications'

## Description

The present invention relates to an image coding method for high efficiency coding of motion image signals in transmission or recording of motion image signals and an apparatus for performing the method.

In the image coding apparatus, recently, along with the development of television telephone and television conference system, various high efficiency coding technologies have been realized. In particular, the coding technology making use of the inter-frame predict coding is widely used in the image coding apparatus.

The inter-frame predict coding system is to determine a predict signal by predicting a frame to be encoded from another frame, and encode a predict error which is a difference between the frame to be encoded and the predict signal.

A simple way of doing this is to code using the previous frame or the following frame or a linear combination of the two as a template and encoding the error signal. This is the method disclosed in EP-A-0424026, and 0 395 440, in which the signal with the least error is used as the template.

US-A-4 703 351 discloses an apparatus for coding a motion image signal in a present field using prediction data of the past three fields. This is done using linear combinations of pixels surrounding the pixels to be coded in said previous fields, and no motion compensation is carried out.

The predict signal can also be determined in the following manners. (1) A reproduced signal of a frame before the intended frame to be encoded is delivered from a memory of a local decoder, and it is compensated for motion to obtain a predict signal. (2) A reproduced signal of a frame before the intended frame to be encoded and a reproduced signal of a frame after the intended frame are delivered from memories of a local decoder, and after they are compensated for a motion, a mean value of them is determined as a predict signal.

In the method of (2), in other words, a frame located between two reproduction signals apart from each other by two frames or more is determined by motion compensating frame interpolation, and this frame is used as the predict signal. Such image coding apparatus is disclosed in EP-A- 0 397 402 and in "Video Coding with Motion Compensated Interpolation for CD-Rom applications" from A.Puri et al (in Signal Processing Image Communication Vol 2 pp 127-144). This conventional image coding apparatus is explained below.

The motion picture signals entering the image coding apparatus are subjected to two types of predict methods alternately on a frame by frame basis. The predict method is the manner of determining the predict signal. The first predict method is to read the reproduction signal two frames before from a frame memory of a local decoder, and compensate it for motion to obtain a predict signal, and the second predict method is to determine an image signal by motion compensating frame interpolation from preceding and succeeding reproduction frames as a predict signal. Afterwards, a predict error signal is determined which is a difference between the frame to be encoded and the predict signal, and an encoded predict error signal is the output signal of the image coding apparatus. The image coding apparatus, possessing a local decoder, decodes the code, determines the reproduction image, and stores it in a frame memory.

In such constitution, however, a reproduction frame later in time is needed when determining the predict signal from the reproduction frames before and after the frame to be coded, that is, the frame later in time must have been already coded. To realize this, it is necessary to change the time sequence of the frames of the motion picture signals entering the coding apparatus, and therefore the constitution of the coding apparatus is complicated.

It is hence a primary object of the invention to raise the coding efficiency by reducing the distortion of predict signal, and to simplify the constitution of the coding apparatus.

To achieve the above object, the invention presents an image coding method for coding a motion image signal comprising pages by using reproduced signals which have been obtained by decoding previously coded motion image signals, where the page comprises either a field or a frame, said method comprising the steps of:
estimating motions of reproduced signals of N,N being an integer of 2 or more, pages to obtain first to N-th motion vectors;
compensating motions of said reproduced signals of N pages using said first to N-th motion vectors to obtain first to N-th prediction signals;
processing the first to N-th prediction signals to obtain a derived prediction signal produced from said first to N-th prediction signals;
calculating a difference between a page to be coded and the derived prediction signal to obtain a prediction error signal; and
coding the prediction error signal and the first to N-th motion vectors to obtain a coded transmission data representing the motion image signal of the page to be coded,
characterised in that said N pages are temporally positioned before said page to be coded.

The invention also presents an image coding apparatus for coding a motion image signal comprising pages by using reproduced signals which have been obtained by decoding previously coded motion image signals, where said page comprises either a field or a frame, said apparatus comprising:
motion estimating means for estimating motions of reproduced signals of N,N being an integer of 2 or more, pages positioned before a page to be coded to obtain first to N-th motion vectors;
compensating means for compensating motions of said reproduced signals of N pages using said first to N-th motion vectors to obtain first to N-th prediction signals;
processing means for processing the first to N-th prediction signals to obtain a derived prediction signal produced from said first to N-th prediction signals;
prediction error calculating means for calculating a difference between the page to be coded and the derived prediction signal to obtain a prediction error signal; and
coding means for coding the prediction error signal and the first to N-th motion vectors to obtain a coded transmission data representing the motion image signal of the page to be coded,
characterised in that said motion estimating and compensating means estimates and compensates said motions of reproduced signals of N pages positioned before the page to be coded to obtain said first to N-th motion vectors and said first to N-th prediction signals.

Being thus composed, the invention is capable of determining in a forward prediction N predict signals by compensating the motion of the reproduction signals of N frames preceding the frame to be coded, and determining the predict signal by linear combining of these predict signals, so that the distortion of predict signal can be reduced. As a result, the predict error signal becomes small, and the coding efficiency is improved.

Fig. 1 is a block diagram of an image coding apparatus in a first embodiment of the invention.

Fig. 2 is an explanatory diagram showing the relation between the frame of motion image signal to be coded, and a frame of reproduction signal used for determining a predict signal, in the image coding apparatus of the first embodiment of the invention.

Fig. 3 is a timing chart of the image coding apparatus of the first embodiment of the invention.

Fig. 4 is a block diagram of image coding apparatuses in second and third embodiments of the invention.

Fig. 5 is an explanatory diagram showing the relation between a frame of moving image signal to be coded, and a frame of reproduction signal used for determining a predict signal, in the image coding apparatus of the third embodiment of the invention.

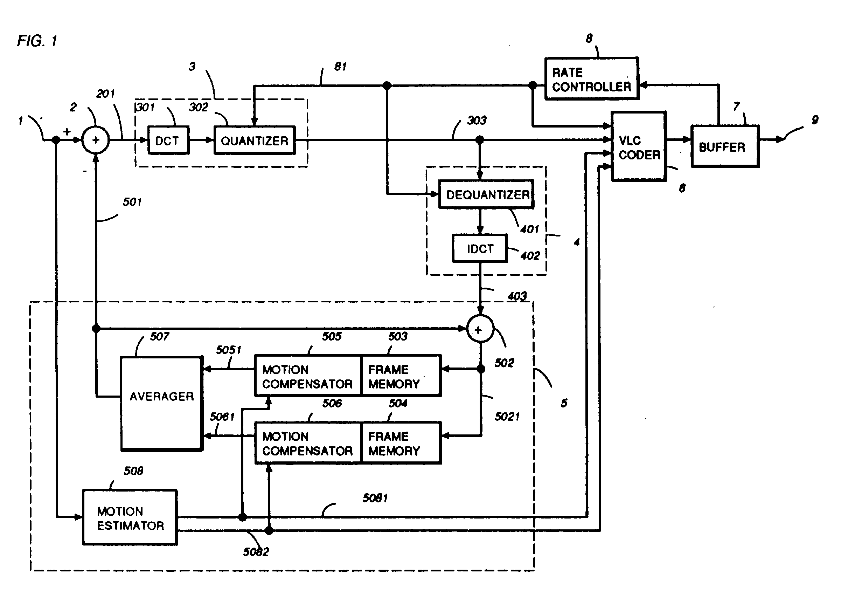

Referring now to the drawings, an embodiment of an image coding apparatus of the invention is described in detail below. Fig. 1 is a block diagram of an image coding apparatus in a first embodiment of the invention. In Fig. 1, numeral 1 denotes an input of the image coding apparatus, 2 is a predict error calculator, 3 is a coder, 4 is a decoder, 5 is a predict signal calculator, 6 is a variable length coder, 7 is a buffer memory, 8 is a rate controller, and 9 is an output of the image coding apparatus.

Numeral 301 is a discrete cosine transform (DCT) circuit, and 302 is a quantizer, which are combined to compose the coder 3. Numeral 401 is a dequantizer, and 402 is an inverse discrete cosine transform (IDCT) circuit, which are combined to compose the decoder 4. Numeral 502 is an adder, 503 is a first frame memory, 504 is a second frame memory, 505 is a first motion compensator, 506 is a second motion compensator, 507 is an averager, and 508 is a motion estimator, which are combined to compose the predict signal calculator 5.

Numeral 201 is a predict error signal produced by the predict error calculator 2, 303 is a predict error code produced by the coder 3, 403 is a reproduced prediction error signal produced by the decoder 4, 501 is a predict signal produced by the predict signal calculator 5, 5021 is a reproduced signal produced by the adder 502, 5051 is a first predict signal produced by the first motion compensator 505, 5061 is a second predict signal produced by the second motion compensator 506, 5081 is a first motion vector produced by the motion estimator 508, 5082 is a second motion vector produced by the motion estimator 508, and 81 is the quantizing step size produced by the rate controller 8.

In the thus composed image coding apparatus, the operation is described below while referring to Fig. 1. The motion image signal to be coded is entered in the input 1 of the image coding apparatus, and is fed into the predict error calculator 2 and the predict signal calculator 5. The predict error calculator 2 determines a difference of the motion image signal to be coded and the predict signal 501, and produces the result as the predict error signal 201. The coder 3 receives the predict error signal 201, processes it by DCT (discrete cosine transform) in the DCT circuit 301, quantizes the obtained DCT coefficient value in the quantizer 302 according to the value of the quantizing step size 81, and produces the predict error code 303. The decoder 4 receives the predict error code 303, dequantizes it in the dequantizer 401 according to the value of the quantizing step size 81, processes the obtained DCT coefficient value by IDCT (inverse discrete cosine transform) in the IDCT circuit 402, and produces the reproduced prediction error signal 403. The variable length coder 6 receives the quantizing step size 81, predict error code 303, first motion vector 5081, and second motion vector 5802, codes them in variable length, and writes the obtained data into the buffer memory 7. The data is read out of the buffer memory 7 at a specified rate, and produced into the output 9 of the image coding apparatus. The rate controller 8 controls the value of the quantizing step size 81 so that the amount of data remaining in the buffer memory 7 becomes a specified amount.

The predict signal calculator 5 is a circuit for obtaining the predict signal 501. The adder 502 adds the reproduced prediction error signal 403 and predict signal 501, and produces the reproduced signal 5021. The reproduced signal 5021 is stored in the first frame memory 503 and second frame memory 504 alternately on a frame by frame basis. The first motion compensator 505 compensates the motion of the reproduction signal read out from the first frame memory by the first motion vector 5081, and produces the first predict signal 5051. The second motion compensator 506 compensates the motion of the reproduction signal read out from the second frame memory 504 by the second motion vector 5082, and produces the second predict signal 5061. The averager 507 determines an average of the first predict signal 5051 and second predict signal 5061, and produces the predict signal 501. The motion estimator 508 determines and produces a motion vector of the image signal to be coded. The motion estimator 508 determines the motion vector between the image signal to be coded and the reproduced signal read out from the first frame memory 503, and produces the first motion vector 5081. It also determines the motion vector between the image signal to be coded and the reproduced signal read out from the second frame memory 504, and produces the second motion vector 5082.

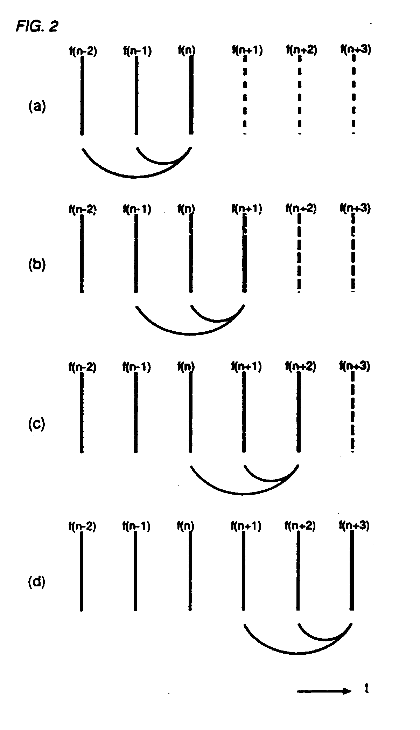

Explained next is the relation between the frame of the motion image signal to be coded and the frame of the reproduced signal used for determining the predict signal 501. Fig. 2 is an explanatory diagram showing the relation between the frame of motion image signal to be coded, and the frame of reproduced signal used for determining the predict signal 501, in which f(n-2) to f(n+3) denote the (n-2)-th (n+3)-th frames of image signals. Fig. 2 (a) shows a case of coding the frame f(n), in which the predict signal is determined by motion compensation of the frame f(n-2) and frame f(n-1) of reproduced signals. Fig. 2 (b) shows a case of coding the frame f(n+1), in which the predict signal is determined by motion compensation of the frame f(n-1) and frame f(n) of reproduced signals. Figs. 2 (c) and (d) show cases of coding the frame f(n+2) and frame f(n+3), respectively.

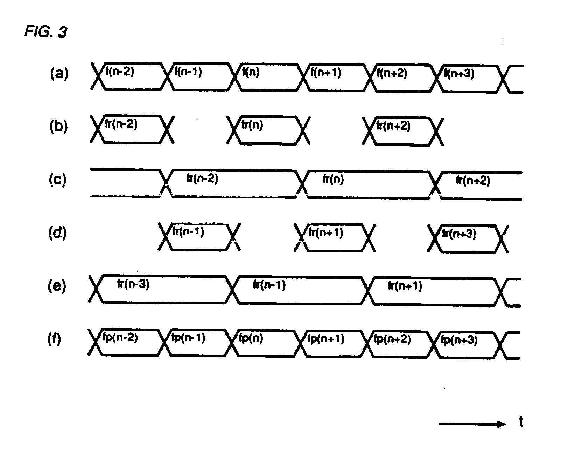

The operation timing of the image coding apparatus is described below while referring to Fig. 3. Fig. 3 shows the timing chart of the image coding apparatus. In Fig. 3, (a) is an input signal of the image coding apparatus, (b) is the reproduction signal written into the first frame memory 503, (c) is the reproduced signal given to the first motion compensator 505 from the first frame memory 503, (d) is the reproduced signal written into the second frame memory 504, (e) is the reproduced signal given to the second motion compensator 506 from the second frame memory 504, and (f) is the predict signal 501. Besides, fr(n) is a frame of reproduced signal obtained by coding and decoding the frame f(n) of input signal, and fp(N) is a frame of predict signal for coding the frame f(n) of input signal.

The reproduced signal 5021 is written into the first frame memory 503 and second frame memory 504 alternately on a frame by frame basis. When the frame f(n) is entered in the input 1 of the image coding apparatus as input signal, the frame fr(n-2) of reproduced signal is read out from the first frame memory 503, and the motion Is compensated by the first motion compensator 505, so that the first predict signal 5051 is obtained. At the same time, the frame fr(n-1) of reproduced signal is read out from the second frame memory 504, and the motion is compensated in the second motion compensator 506, so that the second predict signal 5061 is obtained. The averager 507 determines the average of the first predict signal 5051 and second predict signal 5061, and produces fp(n) as predict signal 501.

In this way, since the average of the first and second predict signals Is used as the predict signal, the distortions contained in the first and second predict signals and are low in correlation and are reduced by determining the average of the two predict signals. Thus, the distortion of predict signal is decreased, that is, the predict error is reduced, so that the coding efficiency is improved.

In the first embodiment, meanwhile, the predict signal 501 was the average of two predict signals, that is, the first predict signal 5051 and second predict signal 5052. But instead, by compensating the motion of N (N being an integer of 2 or more) reproduced frames, the first to N-th predict signals can be determined, and the predict signal 501 can also be obtained by a linear combination thereof.

In the first embodiment, moreover, the distance between the frame to be coded and the frame of the first or second predict signal is one or two frames, but this distance is not limitative.

A second embodiment of the invention is described below while referring to the accompanying drawings.

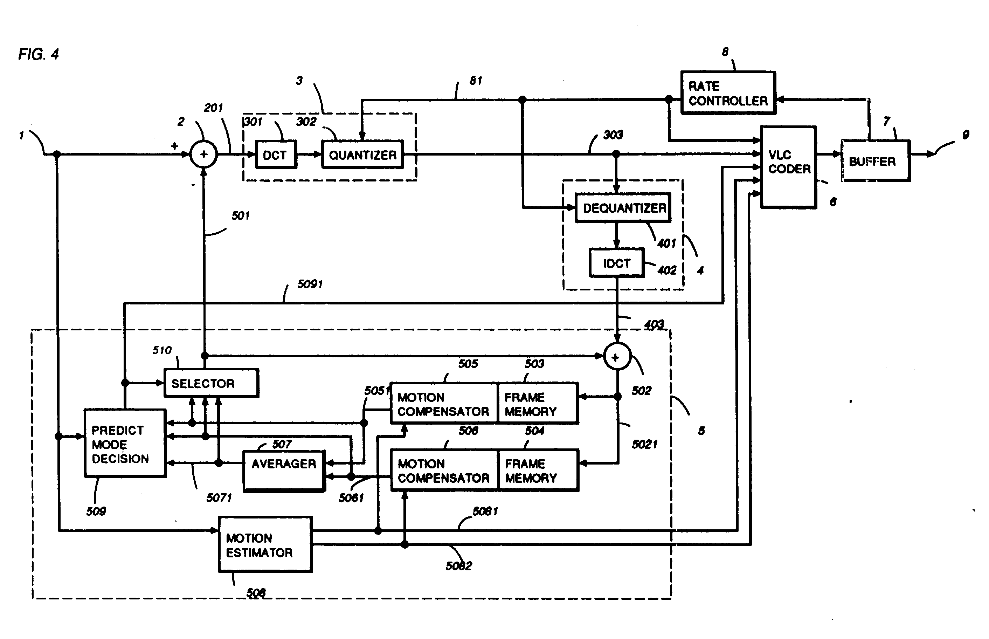

Fig. 4 is a block diagram of an image coding apparatus in the second embodiment of the invention. In Fig. 4, numeral 509 is a predict mode decision circuit, 510 is a predict signal selector, 5071 is a third predict signal produced by an averager 507, and 5091 is a predict mode signal produced by the predict mode decision circuit 509. What is different from the first embodiment shown in Fig. 1 is the composition of the predict signal calculator 5 and the input of the predict mode signal 5091 in the variable length coder 6.

In the thus composed image coding apparatus, the operation is explained below while referring to Fig. 4.

The averager 507 determines an average of the first predict signal 5051 and second predict signal 5061, and produces the third predict signal 5071. The predict mode decision circuit 509 judges a smallest predict error out of the incoming first to third predict signals, and produces an index showing it as a predict mode signal 5091. The predict signal selector 510 selects one out of the first predict signal 5051, second predict signal 5061, and third predict signal 5071, depending on the predict mode signal 5091, and produces a selected signal as the predict signal 501. The predict signal 501 is the one having the smallest predict error out of the first to third predict signals. Besides, the predict mode signal 5091 is entered in the variable length coder 6, and is coded in variable length together with the quantizing step size 81, predict error code 303, first motion vector 5081, and second motion vector 5082.

Thus, according to the second embodiment, by installing the predict mode decision circuit and predict signal selector, the one having the smallest predict error out of the first to third predict signals Is used as the predict signal, so that the distortion of the predict signal can be reduced more as compared with the case of using the average of the first and second predict signals.

A third embodiment is explained below.

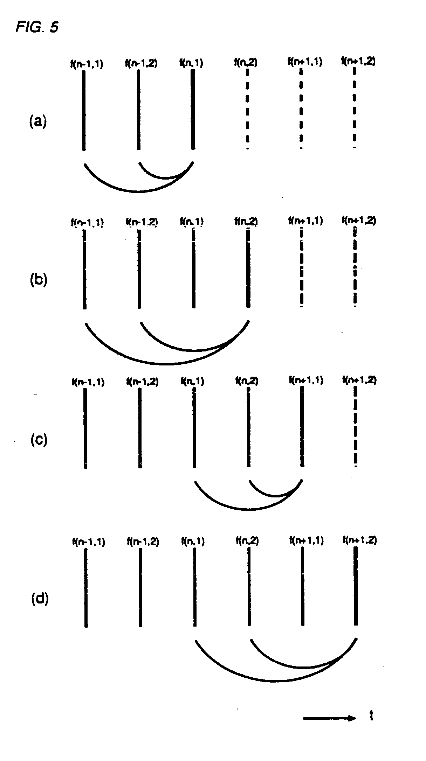

A block diagram of the third embodiment is the same as the second embodiment in Fig. 4. That is different from the second embodiment is that the motion image signal entering the input of the image coding apparatus is of interlaced scanning method. Fig. 5 is an explanatory diagram showing the relation between the frame of the motion image signal to be coded and the frame of reproduction signal used for determining the predict signal 501, in the image coding apparatus of the third embodiment of the invention. In the third embodiment, since the image signal to be coded is of interlaced scanning method, the n-th frame is composed of field f (n, 1) and field f (n, 2). Fig. 5 (a) shows a case of coding the field f(n, 1), in which the predict signal is determined by motion compensation of the field f(n-1, 1) and field f(n-1, 2) of the reproduced signal. Fig. 5 (b) shows a case of coding the field (n, 2), in which the predict signal is determined by motion compensation of the field f(n-1, 1) and field f(n-1, 2) of reproduced signal. Figs. 5 (c) and (d) show cases of determining the field f(n+1, 1) and field f(n+1, 2).

Thus, also when the motion image signal of interlaced scanning method is coded by the coding apparatus in the third embodiment, the distortion of the predict signal can be reduced in the same way as in the second embodiment. Furthermore, since the first predict signal and second predict signal are reproduced signals which are different from each other in the type, an efficient prediction is realized for a moving image signal.

In the third embodiment, the two fields used for determining the predict signal belong to the same frame, but the two fields may also belong to different frames.

In the third embodiment, moreover, the distance between the frame to be coded and the frame of the first or second predict signal is one frame, but this distance is not limitative.

## Claims

1. An image coding method for coding a motion image signal (1) comprising pages by using reproduced signals (5021) which have been obtained by decoding previously coded motion image signals, where the page comprises either a field or a frame, said method comprising the steps of:
estimating motions of reproduced signals of N,N being an integer of 2 or more, pages to obtain first to N-th motion vectors (5081,5082);
compensating (505,506) motions of said reproduced signals of N pages using said first to N-th motion vectors to obtain first to N-th prediction signals (5051,5061);
processing (507, 509, 510) the first to N-th prediction signals to obtain a derived prediction signal (501) produced from said first to N-th prediction signals;
calculating (2) the difference between a page to be coded and the derived prediction signal to obtain a prediction error signal (201); and
coding (3, 6) the prediction error signal and the first to N-th motion vectors to obtain a coded transmission data (9) representing the motion image signal of the page to be coded,
characterised in that said N pages are temporally positioned before said page to be coded.

2. An image coding method according to claim 1 wherein said motion image is an interlaced scan motion image and said pages comprise fields.

3. A method according to any of claims 1 or 2, wherein said processing step (507) calculates a linear combination of the first to N-th prediction signals and outputs the linear combination as the derived prediction signal.

4. A method according to claim 3, wherein said processing step (507) calculates an average of the first to N-th prediction signals to obtain an average prediction signal and outputs the average prediction signal as the derived prediction signal.

5. A method according to claim 1 or 2, wherein said processing step (507, 509, 510) comprises the steps of:
calculating (507) an average of the first to N-th prediction signals (5051,5061) to obtain an average prediction signal (5071);
determining (509) one prediction signal having a smallest prediction error from among the first to N-th prediction signals (5051,5061) and the average prediction signal (5071) and producing a prediction mode signal (5091) indicating the determination result; and
selecting (510) the one prediction signal determined by the determining step and outputting the selected prediction signal as the derived prediction signal (501) together with the prediction mode signal (5091), and
wherein the prediction mode signal is coded by the coding step (6) so as to be included in the coded transmission data (9).

6. A method according to any of claims 1 to 5, wherein said coding step (3, 6) comprises the steps of:
transforming (301) the prediction error signal (201) of the derived prediction signal (501) by discrete cosine transform to obtain a DCT coefficient;
quantizing (302) the DCT coefficient bv using a given quantizing step size to obtain a prediction error code (303); and
variable length coding (6) the prediction error code, the first to N-th motion vectors, and the quantizing step size (81) to obtain the coded transmission data (9).

7. A method according to any of claims 1 to 6, wherein N is equal to 2.

8. An image coding apparatus for coding a motion image signal comprising pages by using reproduced signals which have been obtained by decoding previously coded motion image signals, where said page comprises either a field or a frame, said apparatus comprising:
motion estimating means (508) for estimating motions of reproduced signals of N,N being an integer of 2 or more, pages to be coded to obtain first to N-th motion vectors;
compensating means (505,506) for compensating motions of said reproduced signals of N pages using said first to N-th motion vectors to obtain first to N-th prediction signals:
processing means (507, 509, 510) for processing the first to N-th prediction signals to obtain a derived prediction signal produced from said first to N-th prediction signals;
prediction error calculating means (2) for calculating a difference between the page to be coded and the derived prediction signal to obtain a prediction error signal; and
coding means (3, 6) for coding the prediction error signal and the first to N-th motion vectors to obtain a coded transmission data representing the motion image signal of the page to be coded,
characterised in that said motion estimating and compensating means (505, 506, 508) estimates and compensates said motions of reproduced signals of N pages positioned before the page to be coded to obtain said first to N-th motion vectors and said first to N-th prediction signals.

9. An image encoding apparatus according to claim 8 wherein said motion image is an interlaced scan motion image and said page comprises fields.

10. An apparatus according to claim 8 or 9, wherein said processing means (507) calculates a linear combination of the first to N-th prediction signals and outputs the linear combination as the derived prediction signal.

11. An apparatus according to claim 10, wherein said processing means (507) comprises averaging means for calculating an average of the first to N-th prediction signals to obtain an average prediction signal and outputs the average prediction signal as the derived prediction signal.

12. An apparatus according to any of claims 8 or 9, wherein said processing means (507, 509, 510) comprises:
averaging means (507) for calculating an average of the first to N-th prediction signals to obtain an average prediction signal;
prediction mode decision means (509) for determining one prediction signal having a smallest prediction error from among the first to N-th prediction signals and the average prediction signal and producing a prediction mode signal indicating the determination result; and
selection means (510) responsive to the prediction mode signal for selecting and outputting the one prediction signal determined by the prediction mode decision means as the derived prediction signal, and
wherein the prediction mode signal is coded by the coding means (6) so as to be included in the coded transmission data.

13. An apparatus according to any of claims 8 to 12, wherein said coding means (3. 6) comprises:
transforming means (301) for transforming the prediction error signal by discrete cosine transform to obtain a DCT coefficient; and
quantizing means (302) for quantizing the DCT coefficient by using a given quantizing step size to obtain a prediction error code; and
variable length coding means (6) for variable length coding the prediction error code, the first to N-th motion vectors, and the quantizing step size to obtain the coded transmission data.

14. An apparatus according to 13, further comprising:
decoding means (4) for decoding the prediction error code to obtain a reproduced prediction error signal (403);
adding means (502) for adding the derived prediction signal and the reproduction prediction error signal to obtain a reproduced signal (5021); and
memory means (503, 504) for storing the reproduced signal for future use by the motion compensation means (505,506).

15. An apparatus according to any of claims 8 to 14, wherein N is equal to 2.

## Patentansprüche

1. Ein Bildcodierungsverfahren zur Codierung eines Laufbildsignals (1), das Seiten umfaßt, indem wiedergegebene Signale (5021) verwendet werden, die erhalten worden sind, indem vorhergehend codierte Laufbildsignale decodiert werden, wobei die Seite entweder ein Feld oder ein Bild umfaßt und das genannte Verfahren die Schritte umfaßt:
Abschätzen von Bewegungen der wiedergegebenen Signale von N, N ist ein Ganzzahliges von 2 oder größer Seiten, um einen ersten bist N-ten Bewegungsvektor (5081, 5082) zu erhalten;
Ausgleichen (505, 506) von Bewegungen der genannten wiedergegebenen Signale der N Seiten, wobei der genannte erste bis N-te Bewegungsvektor verwendet werden, um erste bis N-te Prädiktionssignale (5051, 5061) zu erhalten;
Verarbeiten (507, 509, 510) der ersten bis N-ten Prädiktionssignale, um ein abgeleitetes Prädiktionssignal (501) zu erhalten, das von dem genannten ersten bis N-ten Prädiktionssignal erzeugt wird;
Berechnen (2) der Differenz zwischen einer zu codierenden Seite und dem abgeleiteten Prädiktionssignal, um ein Prädiktionsfehlersignal (201) zu erhalten; und
Codieren (3, 6) des Prädiktionsfehlersignals und des ersten bis N-ten Bewegungsvektors, um codierte Übertragungsdaten (9) zu erhalten, die das Laufbildsignal der zu codierenden Seite darstellen,
**dadurch gekennzeichnet**, daß die genannten N Seiten vorübergehend vor der genannten zu codierenden Seite angeordnet werden.

2. Ein Bildcodierungsverfahren gemäß Anspruch 1, wobei das genannte Laufbild ein verschachteltes Abtastlaufbild ist und die genannten Seiten Felder umfassen.

3. Ein Verfahren gemäß irgendeinem der Ansprüche 1 oder 2, wobei der genannte Verarbeitungsschritt (507) eine lineare Kombination des ersten bis N-ten Prädiktionssignals berechnet und die lineare Kombination als das abgeleitete Prädiktionssignal ausgibt.

4. Ein Verfahren gemäß Anspruch 3, wobei der genannte Verarbeitungsschritt (507) einen Mittelwert des ersten bis N-ten Prädiktionssignals berechnet, um ein Durchschnittsprädiktionssignal zu erhalten, und das DurchschnittsprädiktionsSignal als das abgeleitete Prädiktionssignal ausgibt.

5. Ein Verfahren gemäß Anspruch 1 oder 2, wobei der genannte Verarbeitungsschritt (507, 509, 510) die Schritte umfaßt:
Berechnen (507) eines Mittelwerts des ersten bis N-ten Prädiktionssignals (5051, 5061), um ein Durchschnittsprädiktionssignal (5071) zu erhalten;
Bestimmen (509) eines Prädiktionssignals, das einen kleinsten Prädiktionsfehler aufweist, aus dem ersten bis N-ten Prädiktionssignal (5051, 5061) und dem Durchschnittsprädiktionssignal (5071) und Erzeugen eines Prädiktionsartsingals (5091), das das Bestimmungsergebnis angibt; und
Auswählen (510) des einen Prädiktionssignals, das durch den Bestimmungsschritt bestimmt wird, und Ausgeben des ausgewählten Prädiktionssignals als das abgeleitete Prädiktionssignal (501) zusammen mit dem Prädiktionsartsignal (5091), und
wobei das Prädiktionsartsignal durch den Codierungsschritt (6) codiert wird, um in die codierten Übertragungsdaten (9) eingeschlossen zu werden.

6. Ein Verfahren gemäß irgendeinem der Ansprüche 1 bis 5, wobei der genannte Codierungsschritt (3, 6) den Schritt umfaßt:
Transformieren (301) des Prädiktionsfehlersignals (201) des abgeleiteten Prädiktionssignals (501) durch eine diskrete Cosinustransformation, um einen diskreten Cosinustransformationskoeffizienten zu erhalten;
Quantisieren (302) des diskreten Cosinustransformationskoeffizienten, indem eine gegebene Quantisierungsschrittgröße verwendet wird, um einen Prädiktionsfehlercode (303) zu erhalten, und
Codieren (6) mit veränderlicher Länge des Prädiktionsfehlercodes, des ersten bis N-ten Bewegungsvektors und der Quantisierungsschrittgröße (81), um die codierten Übertragungsdaten (9) zu erhalten.

7. Ein Verfahren gemäß irgendeinem der Ansprüche 1 bis 6, wobei N gleich 2 ist.

8. Eine Bildcodierungsvorrichtung zur Codierung eines Laufbildsignals, das Seiten umfaßt, indem wiedergegebene Signale verwendet werden, die erhalten worden sind, indem vorhergehend codierte Laufbildsignale decodiert werden, wobei die Seite entweder ein Feld oder ein Bild umfaßt und das genannte Verfahren die Schritte umfaßt:
eine Bewegungsabschätzungseinrichtung (508) Abschätzen von Bewegungen der wiedergegebenen Signale von N, N ist ein Ganzzahliges von 2 oder größer Seiten, um einen ersten bist N-ten Bewegungsvektor (5081, 5082) zu erhalten;
eine Ausgleichseinrichtung (505, 506) zum Ausgleichen von Bewegungen der genannten wiedergegebenen Signale der N Seiten, wobei der genannte erste bis N-te Bewegungsvektor verwendet werden, um erste bis N-te Prädiktionssignale (5051, 5061) zu erhalten;
eine Verarbeitungseinrichtung (507, 509, 510) zum Verarbeiten der ersten bis N-ten Prädiktionssignale, um ein abgeleitetes Prädiktionssignal zu erhalten, das von dem genannten ersten bis N-ten Prädiktionssignal erzeugt wird;
eine Prädiktionsfehlerberechnungseinrichtung (2) zum Berechnen der Differenz zwischen einer zu codierenden Seite und dem abgeleiteten Prädiktionssignal, um ein Prädiktionsfehlersignal (201) zu erhalten; und
eine Codierungseinrichtung (3, 6) zur Codierung des Prädiktionsfehlersignals und des ersten bis N-ten Bewegungsvektors, um codierte Übertragungsdaten (9) zu erhalten, die das Laufbildsignal der zu codierenden Seite darstellen, **dadurch gekennzeichnet,** daß die genannte Bewegungsabschätzungs- und Ausgleichseinrichtung (505, 506, 508) die genannten Bewegungen des wiedergegebenen Signals der N Seiten abschätzt und ausgleicht, die vor der zu codierenden Seite angeordnet sind, um die genannten ersten bis N-ten Bewegungsvektoren und die genannten ersten bis N-ten Prädiktionssignale zu erhalten.

9. Eine Vorrichtung gemäß Anspruch 1, wobei das genannte Laufbild ein verschachteltes Abtastlaufbild ist und die genannten Seiten Felder umfassen.

10. Eine Vorrichtung gemäß Anspruch 8 oder 9, wobei die genannte Verarbeitungseinrichtung (507) eine lineare Kombination des ersten bis N-ten Prädiktionssignals berechnet und die lineare Kombination als das abgeleitete Prädiktionssignal ausgibt.

11. Eine Vorrichtung gemäß Anspruch 10, wobei die genannte Verarbeitungseinrichtung (507) einen Mittelwert des ersten bis N-ten Prädiktionssignals berechnet, um ein Durchschnittsprädiktionssignal zu erhalten, und das Durchschnittsprädiktionssignal als das abgeleitete Prädiktionssignal ausgibt.

12. Eine Vorrichtung gemäß Anspruch 8 oder 9, wobei die genannte Verarbeitungseinrichtung (507, 509, 510) umfaßt:
eine Mittelungseinrichtung (507) zum Berechnen eines Mittelwerts des ersten bis N-ten Prädiktionssignals, um ein Durchschnittsprädiktionssignal zu erhalten;
eine Prädiktionsartbestimmungseinrichtung (509) zum Bestimmen eines Prädiktionssignals, das einen kleinsten Prädiktionsfehler aufweist, aus dem ersten bis N-ten Prädiktionssignal und dem Durchschnittsprädiktionssignal und zum Erzeugen eines Prädiktionsartsingals, das das Bestimmungsergebnis angibt; und
eine Auswähleinrichtung (510), die auf das Prädiktionsartsignal reagiert, zum Auswählen und Ausgeben des einen Prädiktionssignals, das durch die Prädiktionsartbestimmungseinrichtung bestimmt worden ist, als das abgeleitete Prädiktionssignal, und
wobei das Prädiktionsartsignal durch die Codierungseinrichtung (6) codiert wird, so daß es in die codierten Übertragungsdaten (9) eingeschlossen wird.

13. Eine Vorrichtung gemäß irgendeinem der Ansprüche 8 bis 12, wobei die genannte Codierungseinrichtung (3, 6) umfaßt:
eine Transformationseinrichtung (301) zum Transformieren des Prädiktionsfehlersignals (201) des abgeleiteten Prädiktionssignals durch eine diskrete Cosinustransformation, um einen diskreten Cosinustransformationskoeffizienten zu erhalten;
eine Quantisierungseinrichtung zum Quantisieren (302) des diskreten Cosinustransformationskoeffizienten, indem eine gegebene Quantisierungsschrittgröße verwendet wird, um einen Prädiktionsfehlercode (303) zu erhalten, und
eine Codierungseinrichtung (6) zum Codieren mit veränderlicher Länge des Prädiktionsfehlercodes, des ersten bis N-ten Bewegungsvektors und der Quantisierungsschrittgröße (81), um die codierten Übertragungsdaten (9) zu erhalten.

14. Eine Vorrichtung gemäß Anspruch 13, die femer umfaßt:
eine Dekodiereinrichtung (4) zum Dekodieren des Prädiktionsfehlercodes, um ein wiedergegebenes Prädiktionscodesignal (403) zu erhalten;
eine Addiereinrichtung (502) zum Addieren des abgeleiteten Prädiktionssignals und des Wiedergabeprädiktionsfehlersignals, um ein wiedergegebenes Signal (5021) zu erhalten, und
eine Speichereinrichtung (503, 504) zum Speichem des weidergegebenen Signals zur zukünftigen Verwendung durch die Bewegungsausgleicheinrichtung (505, 505).

15. Eine Vorrichtung gemäß irgendeinem der Ansprüche 8 bis 14, wobei N gleich 2 ist.

## Revendications

1. Méthode de codage d'image pour coder un signal d'image filmée (1) comprenant des pages en utilisant des signaux reproduits (5021) qui ont été obtenus en décodant des signaux d'image filmée codés précédemment, où la page comprend soit un champ, soit une trame, ladite méthode comprenant les étapes consistant à :
estimer les mouvements des signaux reproduits de N, N étant un entier de 2 ou plus, pages pour obtenir des premier à Nième vecteurs de mouvement (5081, 5082) ;
compenser (505, 506) les mouvements desdits signaux reproduits de N pages en utilisant lesdits premier à Nième vecteurs de mouvement pour obtenir des premier à Nième signaux de prédiction (5051, 5061) ;
traiter (507, 509, 510) les premier à Nième signaux de prédiction pour obtenir un signal de prédiction déduit (501) produit à partir desdits premier à Nième signaux de prédiction ;
calculer (2) la différence entre une page à coder et le signal de prédiction déduit pour obtenir un signal d'erreur de prédiction (201) ; et
coder (3, 6) le signal d'erreur de prédiction et les premier à Nième vecteurs de mouvement pour obtenir des données de transmission codées (9) représentant le signal d'image filmée de la page à coder,
caractérisée en ce que lesdites N pages sont temporairement positionnées avant ladite page à coder.

2. Méthode de codage d'image selon la revendication 1, dans laquelle ladite image filmée est une image filmée à balayage entrelacé et lesdites pages comprennent des champs.

3. Méthode selon l'une quelconque des revendications 1 ou 2, dans laquelle ladite étape de traitement (507) calcule une combinaison linéaire des premier à Nième signaux de prédiction et sort la combinaison linéaire en tant que signal de prédiction déduit.

4. Méthode selon la revendication 3, dans laquelle ladite étape de traitement (507) calcule une moyenne des premier à Nième signaux de prédiction pour obtenir un signal de prédiction moyen et sort le signal de prédiction moyen en tant que signal de prédiction déduit.

5. Méthode selon la revendication 1 ou 2, dans laquelle ladite étape de traitement (507, 509, 510) comprend les étapes consistant à :
calculer (507) une moyenne des premier à Nième signaux de prédiction (5051, 5061) pour obtenir un signal de prédiction moyen (5071) ;
déterminer (509) un signal de prédiction ayant une plus petite erreur de prédiction parmi les premier à Nième signaux de prédiction (5051, 5061) et le signal de prédiction moyen (5071) et produire un signal de mode de prédiction (5091) indiquant le résultat de la détermination ; et
sélectionner (510) ledit signal de prédiction déterminé par l'étape de détermination et sortir le signal de prédiction sélectionné en tant que signal de prédiction déduit (501) en même temps que le signal de mode de prédiction (5091), et
dans laquelle le signai de mode de prédiction est codé par l'étape de codage (6) afin d'être inclus dans les données de transmission codées (9).

6. Méthode selon l'une quelconque des revendications 1 à 5, dans laquelle ladite étape de codage (3, 6) comprend les étapes consistant à :
transformer (301) le signal d'erreur de prédiction (201) du signal de prédiction déduit (501) par transformation en cosinus discrète pour obtenir un coefficient de transformation en cosinus discrète ;
quantifier (302) le coefficient de transformation en cosinus discrète en utilisant une valeur de pas de quantification donnée pour obtenir un code d'erreur de prédiction (303) ; et
coder avec une longueur variable (6) le code d'erreur de prédiction, les premier à Nième vecteurs de mouvement et la valeur du pas de quantification (81) pour obtenir les données de transmission codées (9).

7. Méthode selon l'une quelconque des revendications 1 à 6, dans laquelle N est égal à 2.

8. Dispositif de codage d'image pour coder un signal d'image filmée comprenant des pages en utilisant des signaux reproduits qui ont été obtenus en décodant des signaux d'image filmée codés précédemment, où ladite page comprend soit un champ, soit une trame, ledit dispositif comprenant :
des moyens d'estimation de mouvement (508) destinés à estimer les mouvements de signaux reproduits de N, N étant un entier de 2 ou plus, pages à coder pour obtenir des premier à Nième vecteurs de mouvement ;
des moyens de compensation (505, 506) destinés à compenser les mouvements desdits signaux reproduits de N pages en utilisant lesdits premier à Nième vecteurs de mouvement pour obtenir des premier à Nième signaux de prédiction ;
des moyens de traitement (507, 509, 510) destinés à traiter les premier à Nième signaux de prédiction pour obtenir un signal de prédiction déduit produit à partir desdits premier à Nième signaux de prédiction ;
des moyens de calcul d'erreur de prédiction (2) destinés à calculer une différence entre la page à coder et le signal de prédiction déduit pour obtenir un signal d'erreur de prédiction ; et
des moyens de codage (3, 6) destinés à coder le signal d'erreur de prédiction et les premier à Nième vecteurs de mouvement pour obtenir des données de transmission codées représentant le signal d'image filmée de la page à coder,
caractérisé en ce que lesdits moyens d'estimation et de compensation de mouvement (505, 506, 508) estiment et compensent lesdits mouvements des signaux reproduits de N pages positionnées avant la page à coder pour obtenir lesdits premier à Nième vecteurs de mouvement et lesdits premier à Nième signaux de prédiction.

9. Dispositif de codage d'image selon la revendication 8, dans lequel ladite image filmée est une image filmée à balayage entrelacé et ladite page comprend des champs.

10. Dispositif selon la revendication 8 ou 9, dans lequel lesdits moyens de traitement (507) calculent une combinaison linéaire des premier à Nième signaux de prédiction et sortent la combinaison linéaire en tant que signal de prédiction déduit.

11. Dispositif selon la revendication 10, dans lequel lesdits moyens de traitement (507) comprennent des moyens de moyennage destinés à calculer une moyenne des premier à Nième signaux de prédiction pour obtenir un signal de prédiction moyen et sortent le signal de prédiction moyen en tant que signal de prédiction déduit.

12. Dispositif selon l'une quelconque des revendications 8 ou 9, dans lequel lesdits moyens de traitement (507, 509, 510) comprennent :
des moyens de moyennage (507) destinés à calculer une moyenne des premier à Nième signaux de prédiction pour obtenir un signal de prédiction moyen ;
des moyens de décision de mode de prédiction (509) destinés à déterminer un signal de prédiction ayant une plus petite erreur de prédiction parmi les premier à Nième signaux de prédiction et le signal de prédiction moyen et pour produire un signal de mode de prédiction indiquant le résultat de la détermination ; et
des moyens de sélection (510) sensibles au signal de mode de prédiction pour sélectionner et pour sortir ledit signal de prédiction déterminé par les moyens de décision de mode de prédiction en tant que signal de prédiction déduit , et
dans lequel le signal de mode de prédiction est codé par les moyens de codage (6) afin d'être inclus dans les données de transmission codées.

13. Dispositif selon l'une quelconque des revendications 8 à 12, dans lequel lesdits moyens de codage (3, 6) comprennent :
des moyens de transformation (301) destinés à transformer le signal d'erreur de prédiction par transformation en cosinus discrète pour obtenir un coefficient de transformation en cosinus discrète ; et
des moyens de quantification (302) destinés à quantifier le coefficient de transformation en cosinus discrète en utilisant une valeur de pas de quantification donnée pour obtenir un code d'erreur de prédiction ; et
des moyens de codage a longueur variable (6) destinés à coder avec une longueur variable le code d'erreur de prédiction, les premier à Nième vecteurs de mouvement et la valeur du pas de quantification pour obtenir les données de transmission codées.

14. Dispositif selon la revendication 13 comprenant, de plus :
des moyens de décodage (4) destinés à décoder le code d'erreur de prédiction pour obtenir un signal d'erreur de prédiction reproduit (403) ;
des moyens d'addition (502) destinés à additionner le signal de prédiction déduit et le signal d'erreur de prédiction de reproduction pour obtenir un signal reproduit (5021) ; et
des moyens de mémoire (503, 504) destinés à mémoriser le signal reproduit pour une utilisation future par les moyens de compensation de mouvement (505, 506).

15. Dispositif selon l'une quelconque des revendications 8 à 14, dans lequel N est égal à 2.
